# FASCICULE DE BREVET EUROPEEN

(11) **EP 3 717 817 B1**
(45) Date de publication et mention de la délivrance du brevet: **08.12.2021**
(21) Numéro de dépôt: 18804659.3
(22) Date de dépôt: 27.11.2018
(51) Int. Cl.: F16L 33/01

(54) **EMBOUT DE CONNEXION D'UNE CONDUITE FLEXIBLE DE TRANSPORT DE FLUIDE, CONDUITE ET PROCÉDÉ ASSOCIÉS**
ANSCHLUSSENDSTÜCK FÜR EIN FLEXIBLES ROHR ZUM TRANSPORT VON FLÜSSIGKEIT, ZUGEHÖRIGES ROHR UND VERFAHREN
CONNECTION END-PIECE FOR A FLEXIBLE PIPE FOR TRANSPORTING FLUID, ASSOCIATED PIPE AND METHOD

(30) Priorité: 29.11.2017 FR 1761380
(43) Date de publication de la demande: 07.10.2020
(73) Titulaire: TECHNIP N-POWER, 92400 Courbevoie (FR)
(72) Inventeur: GALLOYER, Benoit, 76000 Rouen (FR); PHILLIPS, Paul, 76230 Bois Guillaume (FR)
(74) Mandataire: Lavoix
(86) Numéro de dépôt international: PCT/EP2018/082688
(87) Numéro de publication internationale: WO 2019/105926

(56) Documents cités:
- EP-A1- 1 867 905
- FR-A1- 2 561 745
- FR-A1- 3 000 170
- JP-A- H04 171 390
- US-A- 3 874 064

## Description

La présente invention concerne un embout de connexion d'une conduite flexible de transport de fluide, la conduite flexible comprenant au moins une gaine de pression et une pluralité de couches d'armures de traction disposées extérieurement par rapport à la gaine de pression, l'embout comprenant :
- une voûte d'extrémité s'étendant suivant un axe central ;
- un capot extérieur fixé sur la voûte d'extrémité et délimitant avec la voûte d'extrémité, une chambre de réception d'un tronçon d'extrémité des éléments d'armure ;
- des premiers tronçons d'extrémité des éléments d'armure d'une première couche d'armures et des deuxièmes tronçons d'extrémité des éléments d'armure d'une deuxième couche d'armures, disposés extérieurement par rapport aux premiers tronçons d'extrémité ;
- une bague extérieure appliquée extérieurement sur les deuxièmes tronçons d'extrémité ;
- une bague intermédiaire, intercalée entre les premiers tronçons d'extrémité et les deuxièmes tronçons d'extrémité, en contact avec les premiers tronçons d'extrémité et avec les deuxièmes tronçons d'extrémité, la bague intermédiaire s'étendant autour de l'axe central entre un bord arrière et un bord avant,
les deuxièmes tronçons d'extrémité étant pincés entre la bague extérieure et la bague intermédiaire, les premiers tronçons d'extrémité étant pincés entre la bague intermédiaire et une surface d'appui.

La conduite est en particulier une conduite flexible de type non liée (« unbonded ») destinée au transport d'hydrocarbures à travers une étendue d'eau, tel qu'un océan, une mer, un lac ou une rivière.

Une telle conduite flexible est par exemple réalisée suivant les documents normatifs API 17J, 4^{e} édition Mai 2014 et API RP 17B, 5e édition - Mai 2014 établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant destiné à collecter et à distribuer le fluide. L'ensemble de surface peut être une plateforme semi-submersible, un FPSO ou un autre ensemble flottant.

Dans certains cas, pour l'exploitation de fluides en eaux profondes, la conduite flexible présente une longueur supérieure à 800 m. Les extrémités de la conduite présentent des embouts pour le raccordement à l'ensemble de fond et à l'ensemble de surface.

Ces conduites subissent des efforts très élevés en traction axiale, notamment lorsque l'étendue d'eau dans laquelle est disposée la conduite est très profonde.

Dans ce cas, l'embout supérieur reliant la conduite à l'ensemble de surface doit reprendre une tension axiale très importante, qui peut atteindre plusieurs centaines de tonnes. Ces efforts sont transmis à l'embout par l'intermédiaire des nappes d'armures de traction s'étendant le long de la conduite.

La tension axiale présente non seulement une valeur moyenne élevée, mais aussi des variations permanentes en fonction des mouvements verticaux de l'ensemble de surface et de la conduite, sous l'effet de l'agitation de l'étendue d'eau provoquée par la houle ou par les vagues.

Les variations de tension axiale peuvent atteindre plusieurs dizaines de tonnes et se répéter continuellement durant la durée de service de la conduite. En 20 ans, le nombre de cycles peut ainsi atteindre plus de 20 millions.

Il est donc nécessaire d'assurer une fixation particulièrement robuste entre les nappes d'armures de traction et le corps de l'embout.

Pour assurer une fixation efficace, il est connu de noyer les tronçons d'extrémité des fils d'armure dans un bloc de résine coulée dans la chambre délimitée par la voûte et par le capot. Il est également connu de modifier la configuration des fils dans l'embout pour leur faire suivre un cône ascendant, puis sur un cône descendant, afin de favoriser l'effet cabestan lié à la trajectoire en hélice des fils d'armure. Éventuellement, des crochets sont formés à l'extrémité de chaque fil d'armure pour améliorer le blocage mécanique.

Néanmoins, lorsque l'embout est soumis à des sollicitations dynamiques, les sollicitations en fatigue sont très fortes et sont susceptibles de créer des défaillances notamment au niveau des crochets, et au niveau de la région dans laquelle les armures décollent à l'écart de la gaine et s'encastrent dans la résine.

Pour pallier ce problème, WO2015/082275 décrit un embout du type précité, dans lequel des premiers tronçons d'extrémité d'une première couche d'armures sont pincés entre une bague intérieure et une bague intermédiaire et des deuxièmes tronçons d'extrémité d'une deuxième couche d'armures sont pincés entre la bague intermédiaire et une bague externe.

Un tel arrangement évite de déformer fortement les fils au niveau des moyens d'ancrage et améliore notablement la tenue en fatigue des fils.

Toutefois, elle nécessite un serrage très précis des bagues les unes par rapport aux autres, qui peut être compliqué à mettre en œuvre.

FR 2 561 745 A1 décrit un tuyau flexible pour l'acheminement de fluides divers tels que le pétrole.

US 3 874 064 A décrit un procédé de fixation d'un raccord rigide à l'extrémité d'une conduite flexible.

FR 3 000 170 A1, JP H04 171390 A et EP 1 867 905 A1 décrivent un embout de connexion d'une conduite flexible de transport de fluide et un procédé de montage de l'embout associé.

Un but de l'invention est donc de fournir un embout qui garantisse une reprise en tension axiale efficace lorsque de nombreux cycles de variation de tension axiale s'appliquent sur la conduite, et qui soit néanmoins simple à monter.

À cet effet, l'invention a pour objet un embout selon la revendication 1.

L'embout selon l'invention peut comprendre l'une ou plusieurs des caractéristiques des revendications 2 à 12, prise(s) isolément ou suivant toute combinaison techniquement possible.

L'invention a également pour objet une conduite flexible selon la revendication 13.

L'invention a aussi pour objet un procédé d'assemblage d'un embout d'une conduite flexible selon la revendication 14.

Le procédé selon l'invention peut comprendre les caractéristiques de la revendication 15.

L'invention sera mieux comprise à la lecture de la description qui va suivre, donnée uniquement à titre d'exemple, et faite en se référant aux dessins annexés, sur lesquels :
- la figure 1 est une vue en perspective partiellement éclatée d'une première conduite flexible selon l'invention ;
- la figure 2 est une vue en coupe suivant un plan axial médian de l'embout de la conduite flexible de la figure 1 ;
- la figure 3 est une vue de côté d'une bague intermédiaire partiellement fendue destinée à être introduite dans l'embout de la figure 2 ;
- la figure 4 est une vue en coupe suivant un plan axial médian de la bague de la figure 3 ;
- la figure 5 est une vue d'une demi-section suivant un plan axial médian de la bague intermédiaire ;
- la figure 6 est une vue analogue à la figure 2, lors du montage de l'embout ;
- la figure 7 est une vue analogue à la figure 6, pour une variante de montage ;
- la figure 8 est une vue analogue à la figure 2 d'un deuxième embout selon l'invention ;
- la figure 9 est une vue analogue à la figure 8 d'un troisième embout selon l'invention ;
- la figure 10 est une vue en coupe suivant un plan axial médian d'une variante de bague intermédiaire totalement fendue.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

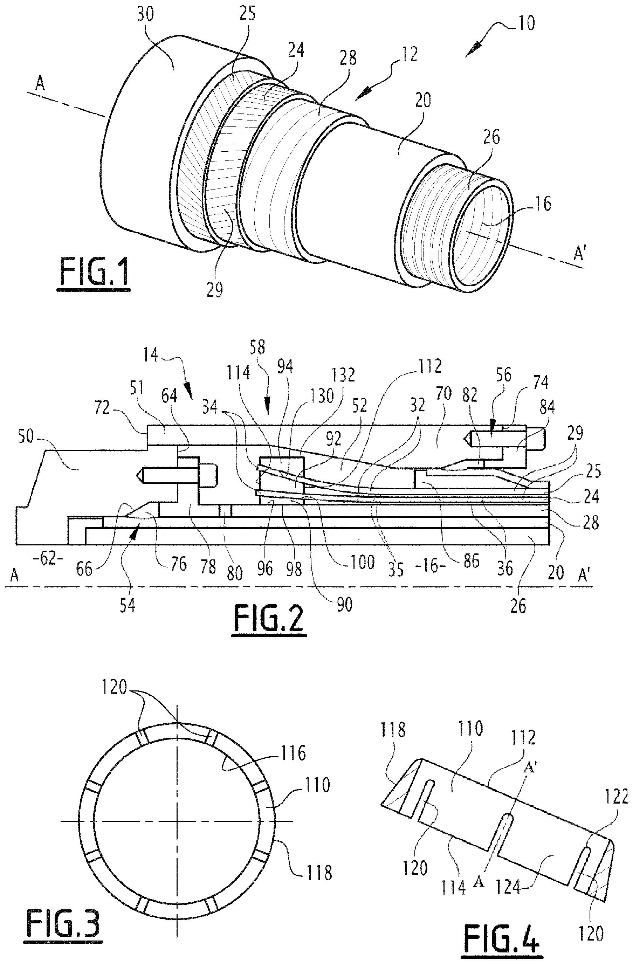

Une première conduite flexible 10 selon l'invention est illustrée partiellement par la figure 1 et par la figure 2.

La conduite flexible 10 comporte un tronçon central 12 illustré en partie sur la figure 1. Elle comporte, à chacune des extrémités axiales du tronçon central 12, un embout d'extrémité 14 (non visible sur la Figure 1) dont les parties pertinentes sont représentées sur la figure 2.

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, 4^{e} édition Mai 2014 et API RP 17B, 5e édition - Mai 2014.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine 20 à base de matériau polymère constituant avantageusement une gaine de pression.

La conduite 10 comporte en outre des couches d'armures de traction 24, 25 disposées extérieurement par rapport à la première gaine 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20, éventuellement une frette, la ou les couches d'armures de traction 24, 25 et une gaine externe 30, destinée à la protection de la conduite 10.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

En variante, la gaine tubulaire 20 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la gaine de pression 20 est par exemple comprise entre 5 mm et 20 mm.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite flexible 10 est alors désignée par le terme anglais « rough bore » en raison de la géométrie de la carcasse 26

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

Dans cet exemple, la voûte de pression 28 est destinée à reprendre les efforts radiaux liés à la pression régnant à l'intérieur de la gaine de pression 20. Elle est par exemple formée d'un fil profilé métallique enroulé en hélice autour de la gaine 20. Le fil profilé présente généralement une géométrie complexe, notamment en forme de Z, de T, de U, de K, de X ou de I, ce qui permet d'agrafer entre elles les spires de la voûte de pression 28. L'agrafage des spires de la voûte de pression 28 permet de maîtriser les écartements entre spires adjacentes afin notamment d'éviter le fluage de la gaine de pression 20. à travers la voûte de pression 28 sous l'effet de la pression régnant à l'intérieur de la conduite 10.

La voûte de pression 28 est enroulée en hélice à pas court autour de la gaine de pression 20, c'est-à-dire avec un angle d'hélice de valeur absolue proche de 90°, typiquement compris entre 75° et 90°.

Eventuellement, une frette non représentée sur la figure 1 entoure la voûte de pression 28. La frette est elle aussi destinée à reprendre les efforts radiaux liés à la pression, en complément avec la voûte de pression 28. La frette est par exemple formée d'un fil métallique de section sensiblement rectangulaire enroulé en hélice à pas court autour de la gaine voûte de pression 28. Les spires de la frette ne sont pas agrafées entre elles. La conduite flexible 10 selon l'invention comprend au moins une couche d'armures 24, 25 formée d'un enroulement hélicoïdal d'au moins un élément d'armure 29 allongé.

Dans l'exemple représenté sur la figure 1, la conduite flexible 10 comporte une pluralité de couches d'armures 24, 25, notamment une première couche d'armures interne 24, appliquée sur la voûte de pression 28 (ou sur la gaine 20 lorsque la voute 28 est absente) et une deuxième couche d'armures externe 25 autour de laquelle est disposée la gaine extérieure 30.

Chaque couche d'armures 24, 25 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple de - a, avec α compris entre 25° et 55°.

Les éléments d'armure 29 sont par exemple formés par des fils métalliques, ou par des rubans composites, notamment des rubans composites renforcés par des fibres de carbone.

Comme on le verra plus bas, les éléments d'armure 29 présentent chacun un tronçon d'extrémité 32 introduit dans l'embout 14. Le tronçon d'extrémité 32 s'étend jusqu'à une extrémité libre 34 disposée dans l'embout 14. Il présente avantageusement une trajectoire hélicoïdale ou pseudo-hélicoïdale d'axe A-A' dans l'embout 14.

Dans l'exemple représenté sur les figures, chaque tronçon d'extrémité 32 s'éloigne progressivement de l'axe A-A' depuis un point de décollement 35 à l'arrière de l'extrémité libre 34 vers l'extrémité libre 34, sans se rapprocher de l'axe A-A' et sans rebrousser vers l'arrière.

L'extrémité libre 34 est alors le point le plus à l'avant du tronçon d'extrémité 32.

Les tronçons d'extrémité 32 des éléments d'armure 29 définissent alors une enveloppe sensiblement tronconique qui correspond à leur épanouissement naturel lorsqu'ils sont libérés de la gaine 20.

Dans cet exemple, la conduite flexible 10 comporte des couches anti-usure 36 intercalées d'une part entre la voûte de pression 28 et la première couche d'armures interne 24, et d'autre part entre les deux couches d'armures 24, 25.

Les couches anti-usure 36 sont représentées uniquement sur la figure 2. Chaque couche anti-usure 36 est formée en enroulant hélicoïdalement une bande polymérique d'épaisseur typiquement comprise entre 2 mm et 4 mm. Chaque couche anti-usure 36 a pour fonction de réduire l'usure et les frottements entre les fils métalliques ou les rubans composites entre lesquels elle est intercalée.

La gaine externe 30 est destinée à empêcher la perméation de fluide depuis l'extérieur de la conduite flexible vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

En variante, la gaine externe 30 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone), le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la gaine externe 30 est par exemple comprise entre 5 mm et 15 mm.

Comme illustré par la figure 2, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 32 des éléments d'armure 29.

L'embout 14 comporte en outre un ensemble avant 54 d'étanchéité autour de la gaine de pression 20, et un ensemble arrière 56 d'étanchéité autour de la gaine extérieure 30.

L'embout 14 comprend de plus un ensemble 58 de fixation des couches d'armures 24, 25 dans la chambre 52.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité (non représentée).

La voûte 50 présente un alésage central 62 destiné à recevoir l'extrémité de la première gaine 20 et à permettre l'écoulement du fluide circulant à travers le passage central 16 vers l'extérieur de la conduite 10.

Dans l'exemple de la figure 2, la voûte d'extrémité 50 définit intérieurement une face arrière 64 délimitant une surface convergente 66 d'appui pour une bague de sertissage.

Le capot 51 comporte une paroi périphérique 70 tubulaire s'étendant autour de l'axe A-A'. La paroi périphérique 70 présente un bord avant 72 fixé sur la voûte d'extrémité 50, à l'écart radialement des couches d'armures 24, 25 et un bord arrière 74 s'étendant axialement vers l'arrière au-delà de la voûte d'extrémité 50.

Le capot 51 délimite la chambre 52 radialement vers l'extérieur. La face arrière 64 de la voûte d'extrémité 50 délimite axialement la chambre 52 vers l'avant.

L'ensemble avant d'étanchéité 54 est avantageusement situé à l'avant de l'embout 14, en contact avec la voûte 50, en étant décalé axialement vers l'avant par rapport à l'ensemble de fixation 58, par rapport aux extrémités libres 34 des tronçons d'extrémité 32 et par rapport à l'ensemble arrière d'étanchéité 56.

Il comporte une bague avant de sertissage 76, destinée à venir en prise sur la gaine de pression 20, et une bride avant de serrage 78 de la bague avant de sertissage 76.

Dans l'exemple représenté sur la figure 2, dans lequel la conduite 10 comporte une voûte de pression 28, l'ensemble avant 54 comporte en outre une bague intermédiaire 80 d'arrêt de la voûte de pression 28.

La bague de sertissage 76 est calée sur la surface convergente 66 et est comprimée par la bride de serrage 78 pour sertir la gaine 20.

L'ensemble arrière d'étanchéité 56 est disposé à l'arrière de l'ensemble de fixation 58. Il comporte une bague arrière de sertissage 82, une bride arrière 84 de serrage, et avantageusement, une canule intermédiaire d'appui 86 interposée entre la gaine externe 30 et les couches d'armures 24, 25.

La bague arrière de sertissage 82 est interposée entre une surface arrière du capot 51 et la gaine externe 30.

La bride arrière de serrage 84 est fixée sur le bord arrière 74 du capot 51. Elle pousse vers l'avant la bague arrière de sertissage 82 pour la comprimer et sertir la gaine externe 30.

La gaine externe 30 s'appuie sur la canule intermédiaire 86. Elle est calée axialement à l'arrière de l'ensemble de fixation 58.

L'ensemble de fixation 58 comporte, dans la chambre 52, une bague intérieure 90 sur laquelle s'appuient extérieurement les premiers tronçons d'extrémité 32 de la première couche d'armures 24, une bague intermédiaire 92, intercalée entre les premiers tronçons d'extrémité 32 de la première couche d'armures 24 et les deuxièmes tronçons d'extrémité 32 de la deuxième couche d'armures 25 et une bague extérieure 94 disposée en appui extérieur sur les deuxième tronçons d'extrémité 32 de la deuxième couche d'armures 25.

Dans cet exemple, l'ensemble de fixation 58 comporte en outre un matériau de remplissage solide, tel qu'une résine polymérique thermodurcissable de type epoxy ou araldite. Le matériau de remplissage solide est disposé dans la chambre 52 autour des tronçons d'extrémité 32 et des bagues 90, 92, 94.

La bague intérieure 90 est disposée en appui sur une surface d'appui extérieure 96 délimitée ici sur la voute de pression 28 ou sur la frette lorsqu'elle est présente.

De plus, selon des variantes non représentées, la bague intérieure 90 pourrait aussi être disposée en appui sur la face extérieure d'une couche anti-usure 36 disposée autour de la voûte de pression 28 ou autour de la frette lorsqu'elle est présente.

En outre, selon une autre variante non représentée, la bague intérieure 90 pourrait aussi être disposée en appui sur la face extérieure de la gaine de pression 20, lorsque la conduite 10 ne comporte aucune voûte de pression.

Dans cette variante sans voûte de pression, les couches d'armures 24, 25 sont avantageusement croisées et enroulées avec des angles d'hélice de valeur absolue sensiblement égale à 55°, cet angle particulier leur conférant une bonne résistance aux efforts radiaux et axiaux.

La bague intérieure 90 présente ici une forme sensiblement tubulaire, avec une surface périphérique intérieure 98 cylindrique d'axe A-A' et une surface périphérique extérieure 100 sensiblement tronconique d'axe A-A'. La surface périphérique extérieure 100 diverge à l'écart de l'axe A-A' dans le sens allant de l'arrière vers l'avant.

Le demi angle au sommet du tronc de cône formé par la surface périphérique extérieure 100 de la bague intérieure 90 est avantageusement inférieur à 20°, préférentiellement compris entre 3° et 15°. Selon une variante non représentée, la surface périphérique extérieure 100 de la bague intérieure 90 est cylindrique d'axe A-A'

La surface périphérique intérieure 98 est appliquée sur la surface d'appui 96. Les tronçons d'extrémité 32 des éléments d'armure 29 de la première couche d'armures 24 sont appliqués sur la surface périphérique extérieure 100, au voisinage des extrémités libres 34.

La bague intérieure 90 est par exemple réalisée en matériau métallique, avantageusement en acier, préférentiellement en acier doux.

Lorsque la première couche d'armures 24 est réalisée en acier, la bague intérieure 90 est préférentiellement réalisée avec un acier moins dur que celui constituant la première couche d'armures 24, afin notamment de ne pas endommager la première couche d'armures 24 lors de son serrage contre la bague intérieure 90 au niveau de la surface périphérique extérieure 100.

Selon d'autres variantes, la bague intérieure 90 est réalisée en matériau composite ou en matériau polymère, avantageusement en polymère à haute performance, par exemple en PEEK, PEI, PAI ou PPSU.

En référence aux figures 3 et 4, la bague intermédiaire 92 comporte un corps annulaire 110 de révolution autour de l'axe A-A', s'étendant le long de l'axe A-A' entre un bord arrière 112 et un bord avant 114.

Elle délimite, entre le bord arrière 112 et le bord avant 114, une surface périphérique intérieure 116 et une surface périphérique extérieure 118.

La longueur du corps annulaire 110, prise le long de l'axe A-A' entre le bord arrière 112 et le bord avant 114 est avantageusement inférieure au diamètre intérieur maximal du corps annulaire 110.

Dans cet exemple, la bague intermédiaire 92 présente avant son montage dans l'embout 14 une surface périphérique intérieure 116 de géométrie sensiblement cylindrique d'axe A-A'. En référence à la figure 2, lors du montage de l'embout 14, la surface périphérique intérieure de la bague intermédiaire est appliquée sur les tronçons d'extrémité 32 des éléments d'armure 29 de la première couche d'armures 24. La bague intermédiaire 92 est alors déformée de sorte que la surface périphérique intérieure 116 épouse la forme de la face extérieure de la première couche d'armures 24, forme qui dépend elle-même de la géométrie de la surface périphérique extérieure de la bague intérieure 90 sur laquelle prend appui la première couche d'armures 24.

Après montage de l'embout 14, la surface périphérique intérieure 116 de la bague intermédiaire 92 s'étend en regard de la surface périphérique extérieure 100 de la bague intérieure 90. Dans cet exemple, la surface périphérique intérieure 116 de la bague intermédiaire 92 après son montage dans l'embout est un tronc de cône divergeant à l'écart de l'axe A-A' dans le sens allant de l'arrière vers l'avant.

Ainsi, les tronçons d'extrémité 32 des éléments d'armure 29 de la première couche d'armures 24 sont pincés entre la bague intérieure 90 et la bague intermédiaire 92.

Selon une autre variante non représentée, la surface périphérique intérieure 116 de la bague intermédiaire 92 est avant son montage de l'embout un tronc cône de cône divergeant à l'écart de l'axe A-A' dans le sens allant de l'arrière vers l'avant.

La surface périphérique extérieure 118 de la bague intermédiaire 92 est sensiblement tronconique d'axe A-A'. Elle diverge à l'écart de l'axe A-A' dans le sens allant de l'arrière vers l'avant.

Les tronçons d'extrémité 32 des éléments d'armure 29 de la deuxième couche d'armures 25 sont appliqués sur la surface périphérique extérieure 118.

Selon l'invention, la bague intermédiaire 92 est au moins partiellement fendue. Dans cet exemple, la bague intermédiaire comporte au moins une fente partielle 120, de préférence une pluralité de fentes partielles 120 ménagées à travers le corps annulaire 110.

Chaque fente partielle 120 s'étend ainsi entre un bord 112, 114 du corps annulaire 110, dans lequel elle débouche, et un fond 122 situé à l'écart des bords 112, 114.

Dans l'exemple représenté sur les figures 3 et 4, la fente 120 débouche dans le bord avant 114 et est borgne à son autre extrémité.

Elle débouche radialement à travers chacune des surfaces périphériques 116, 118.

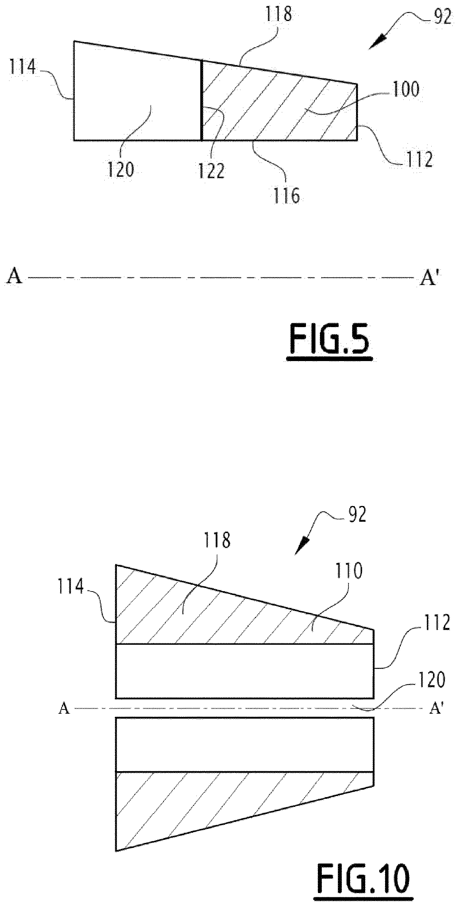

Les fentes partielles 120 sont réparties angulairement autour de l'axe A-A' en étant séparées angulairement les unes des autres. Le nombres de fentes 120 est avantageusement compris entre 1 et 20, notamment entre 4 et 16 En référence à la figure 5, dans au moins une demi section longitudinale médiane passant par le centre de la fente 120 et par l'axe A-A', l'aire occupée par la fente 120 est supérieure à 50 % de l'aire totale de la demi section longitudinale.

La largeur de chaque fente 120, prise circonférentiellement autour de l'axe A-A' est inférieure à la longueur de la fente 120, prise longitudinalement le long de l'axe A-A'.

Les fentes 120 délimitent entre elles dans le corps 110, jusqu'au bord avant 114, des volets 124 déformables radialement entre une configuration de repos et une configuration radialement contractée vers l'axe A-A'.

La bague intermédiaire 92 est réalisée par exemple en métal, avantageusement en acier, préférentiellement en acier doux.

Lorsque les première et deuxième couches d'armures 24, 25 sont réalisées en acier, la bague intermédiaire 92 est préférentiellement réalisée avec un acier moins dur que celui constituant ces deux couches d'armures 24, 25, afin notamment de ne pas endommager ces deux couches d'armure 24, 25 lors du montage de la bague intermédiaire 92 et lors du serrage des couches d'armures 24, 25 contre la bague intermédiaire 92 contre les surfaces 116, 118.

Selon d'autres variantes, la bague intermédiaire 92 est réalisée en matériau composite ou en matériau polymère, avantageusement en polymère à haute performance, par exemple en PEEK, PEI, PAI ou PPSU..Elle est formée d'un seul tenant en étant venue de matière.

La bague extérieure 94 est montée en appui sur les tronçons d'extrémité 32 des éléments d'armure 29 de la deuxième couche d'armures 25.

La bague extérieure 94 présente une surface périphérique intérieure 130 tronconique et une surface périphérique extérieure 132 cylindrique.

La surface périphérique intérieure 130 est appliquée sur les tronçons d'extrémité 32 des éléments d'armure 29 de la deuxième couche d'armures 25.

Ainsi, les tronçons d'extrémité 32 des éléments d'armure 29 de la deuxième couche d'armures 25 sont pincés entre la bague intermédiaire 92 et la bague extérieure 94.

La bague extérieure 94 est par exemple réalisée en métal, avantageusement en acier, préférentiellement en acier doux.

Lorsque la deuxième couche d'armures 25 est réalisée en acier, la bague extérieure 94 est préférentiellement réalisée avec un acier moins dur que celui constituant la deuxième couche d'armures 25, afin notamment de ne pas endommager la deuxième couche d'armures 25 lors de son serrage contre la bague extérieure 94 au niveau de la surface périphérique intérieure 130.

Selon d'autres variantes, la bague extérieure 94 est réalisée en matériau composite ou en matériau polymère, avantageusement en polymère à haute performance, par exemple en PEEK, PEI, PAI ou PPSU.

La bague extérieure 94 est de préférence sertie pour compresser radialement les tronçons d'extrémité 32 des éléments d'armure 29 de la deuxième couche d'armures 25, la bague intermédiaire 92, et les tronçons d'extrémité 32 des éléments d'armure 29 de la première couche d'armures 24.

Pour monter l'embout 14 après la fabrication du tronçon intermédiaire 12 de la conduite 10, le capot 51 et l'ensemble arrière d'étanchéité 56 sont engagés autour de la gaine externe 30. La gaine externe 30 est alors dénudée à son extrémité pour faire apparaître les tronçons d'extrémité 32 des éléments d'armure 29 de chaque couche d'armures 24, 25.

La bague extérieure 94 est alors engagée autour des tronçons d'extrémité 32 des éléments d'armure 29 de la deuxième couche d'armures 25.

Les tronçons d'extrémité 32 se déploient ensuite radialement à l'écart les uns des autres de manière naturelle, sans qu'il soit nécessaire de déformer significativement les tronçons d'extrémité 32, ni de les replier vers l'arrière.

Ensuite, la bague intermédiaire 92 est introduite entre les extrémités libres 34 des éléments d'armure 29 des couches d'armures 24, 25.

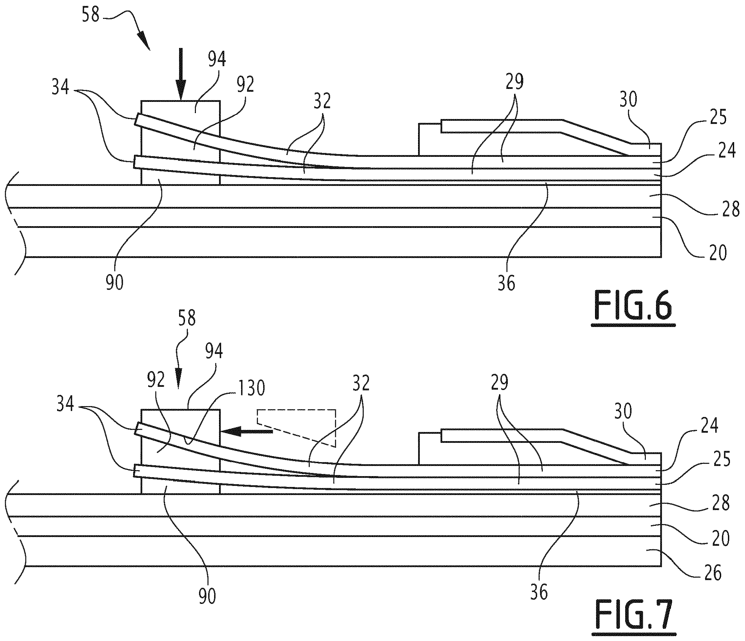

Puis, la bague intérieure 90 est insérée entre la voûte de pression 28 et des éléments d'armure 29 de la première couche d'armures 24. Puis, comme illustré par la figure 6, la bague extérieure 94 est amenée en regard de la bague intermédiaire 92 et de la bague intérieure 90.

Une force radiale de sertissage est alors appliquée sur la bague extérieure 94 pour sertir d'une part les tronçons d'extrémité 32 des éléments d'armure 29 de la deuxième couche d'armures 25 entre la bague extérieure 94 et la bague intermédiaire 92, et d'autre part, par déformation radiale de la bague intermédiaire 92, pour sertir les tronçons d'extrémité 32 des éléments d'armure 29 de la première couche d'armures 24 entre la bague intermédiaire 92 et la bague intérieure 90.

La force radiale est engendrée par exemple par une machine de sertissage radial du type commercialisé par la société FINN-POWER.

Puis, de manière classique, l'ensemble avant 54 d'étanchéité et la voûte 50 d'extrémité sont montés. Le capot 51 est alors déplacé vers la voûte 50 et est fixé à celle-ci pour fermer la chambre 52.

Avantageusement, du matériau de remplissage propre à se solidifier est ensuite introduit sous forme fluide dans la chambre 52 pour noyer les bagues 90, 92, 94 et les tronçons d'extrémité 32 des éléments d'armure 29. Le matériau de remplissage se solidifie pour immobiliser les tronçons d'extrémité 32 des éléments d'armure 29 par l'intermédiaire des bagues 90, 92, 94.

Selon l'invention, la présence d'une bague intermédiaire 92 au moins partiellement fendue assure sa compressibilité radiale et la bonne transmission des efforts de serrage radial durant le montage et après celui-ci.

En particulier, le serrage de la bague extérieure 94 se transmet radialement vers l'intérieur et active le serrage simultané des tronçons d'extrémité 32 des deux couches d'armures 24, 25. La première couche d'armures 24 et la deuxième couche d'armures 25 communiquent mécaniquement par l'intermédiaire de la bague intermédiaire 92. Chacune de ces couches 24, 25 est ancrée solidement, en utilisant un effet de coin qui s'autoactive.

Les pressions de contact qui sont appliquées sur les tronçons d'extrémité 32 sont par ailleurs plus uniformes, puisqu'elles se répartissent facilement durant le montage et le sertissage de la bague extérieure 94 grâce à la flexibilité radiale de la bague intermédiaire 92.

Les forces de serrage nécessaires pour le sertissage durant le montage sont en outre réduites.

La forme particulière des bagues 90, 92, 94, et en particulier la forme de la surface périphérique extérieure 118 et de la surface périphérique intérieure 116 de la bague intermédiaire 92, limite la déformation des éléments d'armure 29 et supprime la nécessité de les replier significativement vers l'arrière.

Les éléments d'armure 29 restent organisés lors du montage, ce qui crée moins de trous de montage. La course de serrage est en outre réduite.

Dans une variante illustrée par la figure 7, la force de sertissage est appliquée axialement et engendre une composante radiale par effet de coin lors de la coopération entre la surface périphérique intérieure 130 conique de la bague extérieure 94, les tronçons d'extrémité 32 des éléments d'armure 29 de la deuxième couche d'armures 25 et la surface périphérique extérieure 118 de la bague intermédiaire 92.

Dans une autre variante, la bague intermédiaire 92 est réalisée en un matériau déformable radialement.

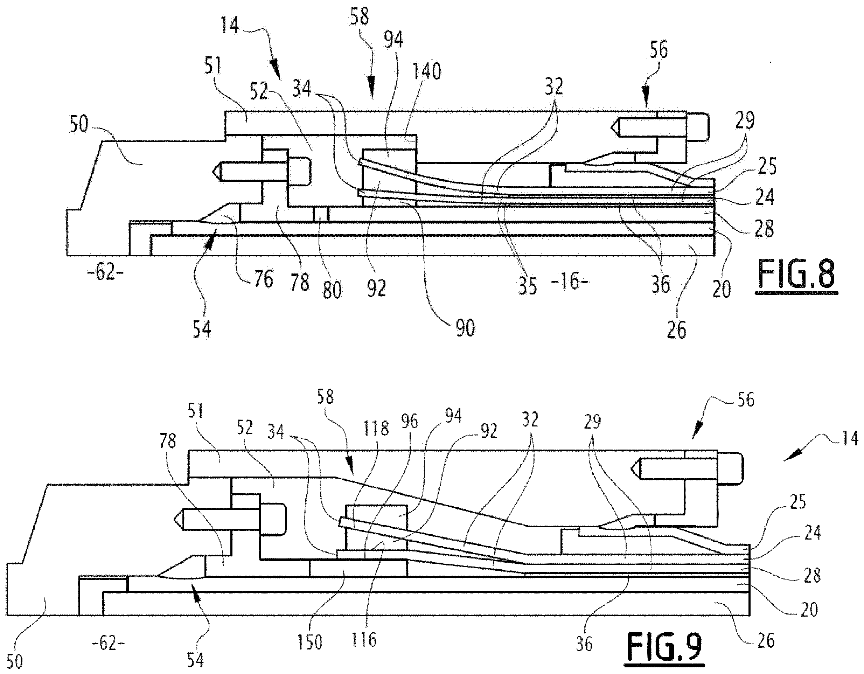

Dans la variante illustrée par la figure 8, le capot 51 définit au moins une butée transversale 140 dirigée vers l'avant, formée par exemple par un épaulement annulaire disposé en regard de la face arrière 64 de la voûte d'extrémité 50.

La bague extérieure 94 est montée en butée à l'arrière contre la butée transversale 140. Ceci assure un blocage complémentaire des éléments d'armure 29 par coopération mécanique.

Dans une autre variante illustrée par la figure 9, l'embout 14 est dépourvu de bague intérieure 90.

La bride avant 78 est munie d'un prolongement arrière 150 cylindrique, définissant la surface d'appui 96 cylindrique. Alternativement, la face externe du prolongement arrière 150 est un tronc de cône et la surface d'appui 96 diverge à l'écart de l'axe A-A' dans le sens allant de l'arrière vers l'avant.

Les tronçons d'extrémité 32 des éléments d'armure 29 de la première couche d'armures 24 sont alors pincés entre le prolongement arrière 150 de la bride avant 78 et la bague intermédiaire 92.

Dans la variante illustrée par la figure 10, la fente 120 traverse le corps annulaire 110 de la bague intermédiaire 92 sur toute sa hauteur. Elle s'étend le long d'une génératrice. Elle débouche à la fois dans le bord arrière 112 et dans le bord avant 114.

Dans cet exemple, la bague intermédiaire 92 reste formée d'un seul tenant en étant venue de matière.

Dans d'autres variantes (non représentées), au moins une fente 120 est une fente partielle et une autre fente 120 est une fente traversante, et/ou au moins une fente 120 partielle débouche dans le bord avant 114, au moins une autre fente 120 partielle débouchant dans le bord arrière 112.

## Revendications

1. Embout (14) de connexion d'une conduite flexible (10) de transport de fluide, la conduite flexible (10) comprenant au moins une gaine de pression (20) et une pluralité de couches (24, 25) d'armures de traction disposées extérieurement par rapport à la gaine de pression (20), l'embout (14) comprenant :
- une voûte d'extrémité (50) s'étendant suivant un axe central (A-A') ;
- un capot extérieur (51) fixé sur la voûte d'extrémité (50) et délimitant avec la voûte d'extrémité (50), une chambre de réception (52) d'un tronçon d'extrémité (32) des éléments d'armure (29) ;
- des premiers tronçons d'extrémité (32) des éléments d'armure (29) d'une première couche d'armures (24) et des deuxièmes tronçons d'extrémité (32) des éléments d'armure (29) d'une deuxième couche d'armures (25), disposés extérieurement par rapport aux premiers tronçons d'extrémité (32) ;
- une bague extérieure (94) appliquée extérieurement sur les deuxièmes tronçons d'extrémité (32) ;
- une bague intermédiaire (92), intercalée entre les premiers tronçons d'extrémité (32) et les deuxièmes tronçons d'extrémité (32), en contact avec les premiers tronçons d'extrémité (32) et avec les deuxièmes tronçons d'extrémité (32), la bague intermédiaire (92) s'étendant autour de l'axe central (A-A') entre un bord arrière (112) et un bord avant (114),
les deuxièmes tronçons d'extrémité (32) étant pincés entre la bague extérieure (94) et la bague intermédiaire (92), les premiers tronçons d'extrémité (32) étant pincés entre la bague intermédiaire (92) et une surface d'appui (96) ;
**caractérisé en ce que** la bague intermédiaire (92) est au moins partiellement fendue.

2. Embout (14) selon la revendication 1, dans lequel la bague intermédiaire (92) est réalisée d'un seul tenant.

3. Embout (14) selon la revendication 1 ou 2, dans lequel la bague intermédiaire (92) présente au moins une fente (120) partielle débouchant dans l'un du bord avant (114) et du bord arrière (112), sans déboucher dans l'autre du bord avant (114) et du bord arrière (112).

4. Embout (14) selon la revendication 3, dans lequel, dans au moins une demi-section longitudinale médiane de la bague intermédiaire (92) passant par la fente (120), l'aire occupée par la fente (120) est supérieure à 50 % de l'aire totale de la demi-section longitudinale médiane de la bague intermédiaire (92).

5. Embout (14) selon l'une quelconque des revendications 3 à 4, dans lequel la bague intermédiaire (92) présente une pluralité de fentes (120) partielles réparties angulairement autour de l'axe central (A-A').

6. Embout (14) selon l'une quelconque des revendications 3 à 5, dans lequel la ou chaque fente (120) partielle débouche dans le bord avant (114).

7. Embout (14) selon l'une quelconque des revendications précédentes, dans lequel la bague intermédiaire (92) présente au moins une fente (120) traversant longitudinalement la bague intermédiaire (92), la fente (120) débouchant dans le bord avant (114) et dans le bord arrière (112) de la bague.

8. Embout (14) selon l'une quelconque des revendications précédentes, dans lequel la bague intermédiaire (92) présente une surface périphérique extérieure (118) tronconique, sur laquelle s'appuient les deuxièmes tronçons d'extrémité (32) et une surface périphérique intérieure (116) cylindrique ou tronconique sur laquelle s'appuient les premiers tronçons d'extrémité (32).

9. Embout (14) selon la revendication 8, dans lequel la bague intermédiaire (92) présente au moins une fente (120) débouchant radialement dans la surface périphérique extérieure (118) et dans la surface périphérique intérieure (116).

10. Embout (14) selon l'une quelconque des revendications précédentes, comportant une bague intérieure (90) définissant la surface d'appui (96).

11. Embout (14) selon l'une quelconque des revendications 1 à 9, comportant une bride annulaire (78) fixée sur la voûte d'extrémité (50), la bride annulaire (78) définissant la surface d'appui (96).

12. Embout (14) selon l'une quelconque des revendications précédentes, dans lequel le capot extérieur (51) définit intérieurement dans la chambre de réception (52) une butée transversale avant (140), la bague extérieure (94) étant calée sur la butée transversale avant (140).

13. Conduite flexible (10) comprenant au moins une gaine de pression (20), une pluralité de couches (24, 25) d'armures de traction disposées extérieurement par rapport à la gaine de pression (20), et au moins un embout (14) de raccordement selon l'une quelconque des revendications précédentes.

14. Procédé d'assemblage d'un embout (14) d'une conduite flexible (10), la conduite flexible (10) comportant comprenant au moins une gaine de pression (20) et une pluralité de couches (24, 25) d'armures de traction disposées extérieurement par rapport à la gaine de pression (20), le procédé comportant les étapes suivantes :
- disposition d'une bague extérieure (94) sur des deuxièmes tronçons d'extrémité (32) d'une deuxième couche d'armures (25);
- intercalage d'une bague intermédiaire (92) au moins partiellement fendue entre des premiers tronçons d'extrémité (32) d'une première couche d'armures (24) et les deuxièmes tronçons d'extrémité (32) de la deuxième couche d'armures (25) situés extérieurement par rapport aux premiers tronçons d'extrémité (32), la bague intermédiaire (92) étant en contact avec les premiers tronçons d'extrémité (32) et avec les deuxièmes tronçons d'extrémité (32) ;
- disposition des premiers tronçons d'extrémité (32) de la première couche d'armures (24) sur une surface d'appui (96) ;
- pincement des deuxièmes tronçons d'extrémité (32) entre la bague extérieure (94) et la bague intermédiaire (92), et pincement des premiers tronçons d'extrémité (32) entre la bague intermédiaire (92) et la surface d'appui (96) sous l'effet de la déformation radiale de la bague intermédiaire (92).

15. Procédé selon la revendication 14, dans lequel le pincement des deuxièmes tronçons d'extrémité (32) et des premiers tronçons d'extrémité (32) est effectué par sertissage radial ou axial de la bague extérieure (94).

## Patentansprüche

1. Anschlussstück (14) zum Verbinden einer flexiblen Leitung (10) zum Fluidtransport, die flexible Leitung (10) umfassend mindestens einen Druckmantel (20) und eine Vielzahl von Schichten (24, 25) zur Zugarmierung, die in Bezug auf den Druckmantel (20) außen angeordnet sind, das Anschlussstück (14) umfassend:
- eine Endwölbung (50), die sich entlang einer Mittelachse (A-A') erstreckt;
- eine Außenabdeckung (51), die an der Endwölbung (50) befestigt ist und mit der Endwölbung (50) eine Aufnahmekammer (52) eines Endabschnitts (32) der Armierungselemente (29) begrenzt;
- erste Endabschnitte (32) der Armierungselemente (29) einer ersten Armierungsschicht (24) und zweite Endabschnitte (32) der Armierungselemente (29) einer zweiten Armierungsschicht (25), die in Bezug auf die ersten Endabschnitte (32) außen angeordnet sind;
- einen Außenring (94), der außen auf den zweiten Endabschnitten (32) angebracht ist;
- einen Zwischenring (92), der zwischen den ersten Endabschnitten (32) und den zweiten Endabschnitten (32) eingefügt ist und mit den ersten Endabschnitten (32) und mit den zweiten Endabschnitten (32) in Kontakt ist, wobei sich der Zwischenring (92) zwischen einem hinteren Rand (112) und einem vorderen Rand (114) um die Mittelachse (A-A') erstreckt,
wobei die zweiten Endabschnitte (32) zwischen dem Außenring (94) und dem Zwischenring (92) eingeklemmt sind und die ersten Endabschnitte (32) zwischen dem Zwischenring (92) und einer Anlagefläche (96) eingeklemmt sind;
**dadurch gekennzeichnet, dass** der Zwischenring (92) mindestens teilweise gespalten ist.

2. Anschlussstück (14) nach Anspruch 1, wobei der Zwischenring (92) aus einem Stück gefertigt ist.

3. Anschlussstück (14) nach Anspruch 1 oder 2, wobei der Zwischenring (92) mindestens einen teilweisen Spalt (120) aufweist, der in eines von dem vorderen Rand (114) und dem hinteren Rand (112) mündet, ohne in den anderen von dem vorderen Rand (114) und dem hinteren Rand (112) zu münden.

4. Anschlussstück (14) nach Anspruch 3, wobei in mindestens einem mittleren Längshalbschnitt des Zwischenrings (92), der durch den Spalt (120) verläuft, die von dem Spalt (120) eingenommene Fläche größer als 50 % der Fläche des mittleren Längshalbschnitts des Zwischenrings (92) ist.

5. Anschlussstück (14) nach einem der Ansprüche 3 bis 4, wobei der Zwischenring (92) eine Vielzahl von teilweisen Spalten (120) aufweist, die winkelförmig um die Mittelachse (A-A') verteilt sind.

6. Anschlussstück (14) nach einem der Ansprüche 3 bis 5, wobei der oder jeder teilweise Spalt (120) in den vorderen Rand (114) mündet.

7. Anschlussstück (14) nach einem der vorherigen Ansprüche, wobei der Zwischenring (92) mindestens einen Spalt (120) aufweist, der in Längsrichtung durch den Zwischenring (92) verläuft, wobei der Spalt (120) in den vorderen Rand (114) und in den hinteren Rand (112) des Rings mündet.

8. Anschlussstück (14) nach einem der vorherigen Ansprüche, wobei der Zwischenring (92) eine kegelstumpfförmige äußere Umfangsfläche (118), an der die zweiten Endabschnitte (32) anliegen, und eine zylindrische oder kegelstumpfförmige innere Umfangsfläche (116), an der die ersten Endabschnitte (32) anliegen, aufweist.

9. Anschlussstück (14) nach Anspruch 8, wobei der Zwischenring (92) mindestens einen Spalt (120) aufweist, der radial in die äußere Umfangsfläche (118) und in die innere Umfangsfläche (116) mündet.

10. Anschlussstück (14) nach einem der vorherigen Ansprüche, umfassend einen Innenring (90), der die Anlagefläche (96) definiert.

11. Anschlussstück (14) nach einem der Ansprüche 1 bis 9, umfassend einen ringförmigen Flansch (78), der an der Endwölbung (50) befestigt ist, wobei der ringförmige Flansch (78) die Anlagefläche (96) definiert.

12. Anschlussstück (14) nach einem der vorherigen Ansprüche, wobei die äußere Abdeckung (51) im Inneren der Aufnahmekammer (52) einen vorderen Queranschlag (140) definiert, wobei der Außenring (94) auf dem vorderen Queranschlag (140) verkeilt ist.

13. Flexible Leitung (10), umfassend mindestens einen Druckmantel (20), eine Vielzahl von Schichten (24, 25) einer Zugarmierung, die in Bezug auf den Druckmantel (20) außen angeordnet sind, und mindestens ein Anschlussstück (14) nach einem der vorherigen Ansprüche.

14. Verfahren zur Montage eines Anschlussstücks (14) einer flexiblen Leitung (10), die flexible Leitung (10) umfassend mindestens einen Druckmantel (20) und eine Vielzahl von Schichten (24, 25) einer Zugarmierung, die in Bezug auf den Druckmantel (20) außen angeordnet sind, das Verfahren umfassend die folgenden Schritte:
- Anordnen eines Außenrings (94) an den zweiten Endabschnitten (32) einer zweiten Armierungsschicht (25);
- Einfügen eines Zwischenrings (92), der mindestens teilweise gespalten ist, zwischen den ersten Endabschnitten (32) einer ersten Armierungsschicht (24) und den zweiten Endabschnitten (32) der zweiten Armierungsschicht (25), die sich in Bezug auf die ersten Endabschnitte (32) außen befinden, wobei der Zwischenring (92) in Kontakt mit den ersten Endabschnitten (32) und mit den zweiten Endabschnitten (32) ist;
- Anordnen der ersten Endabschnitte (32) der ersten Armierungsschicht (24) auf einer Anlagefläche (96);
- Einklemmen der zweiten Endabschnitte (32) zwischen dem Außenring (94) und dem Zwischenring (92), und Einklemmen der ersten Endabschnitte (32) zwischen dem Zwischenring (92) und der Anlagefläche (96) unter der Wirkung der radialen Verformung des Zwischenrings (92).

15. Verfahren nach Anspruch 14, wobei das Verklemmen der zweiten Endabschnitte (32) und der ersten Endabschnitte (32) durch radiales oder axiales Verpressen des Außenrings (94) erfolgt.

## Claims

1. A connecting end fitting (14) of a flexible pipe (10) for transporting fluid, the flexible pipe (10) comprising at least one pressure sheath (20) and a plurality of tensile armor layers (24, 25) arranged outwardly relative to the pressure sheath (20), the end fitting (14) comprising:
- an end vault (50) extending along a central axis (A-A');
- an outer cover (51) fastened on the end vault (50) and delimiting, with the end vault (50), a chamber (52) for receiving an end segment (32) of the armor layers (29);
- first end segments (32) of the armor elements (29) of a first armor layer (24) and second end segments (32) of the armor elements (29) of a second armor layer (25), arranged outwardly relative to the first end segments (32);
- an outer ring (94) applied outwardly on the second end segments (32);
- an intermediate ring (92), inserted between the first end segments (32) and the second end segments (32), in contact with the first end segments (32) and with the second end segments (32), the intermediate ring (92) extending around the central axis (A-A') between a rear edge (112) and a front edge (114),
the second end segments (32) being clamped between the outer ring (94) and the intermediate ring (92), the first end segments (32) being clamped between the intermediate ring (92) and a bearing surface (96);
**characterized in that** the intermediate ring (92) is at least partially split.

2. The end fitting (14) according to claim 1, wherein the intermediate ring (92) is made in one piece.

3. The end fitting (14) according to claim 1 or 2, wherein the intermediate ring (92) has at least one partial slot (120) emerging in one of the front edge (114) and the rear edge (112), without emerging in the other of the front edge (114) and the rear edge (112).

4. The end fitting (14) according to claim 3, wherein, in at least one median longitudinal half-section of the intermediate ring (92) passing through the slot (120), the area occupied by the slot (120) is greater than 50% of the total area of the median longitudinal half-section of the intermediate ring (92).

5. The end fitting (14) according to any one of claims 3 to 4, wherein the intermediate ring (92) has a plurality of partial slots (120) distributed angularly around the central axis (A-A').

6. The end fitting (14) according to any one of claims 3 to 5, wherein the or each partial slot (120) emerges in the front edge (114).

7. The end fitting (14) according to any one of the preceding claims, wherein the intermediate ring (92) has at least one slot (120) passing longitudinally through the intermediate ring (92), the slot (120) emerging in the front edge (114) and in the rear edge of the ring (112).

8. The end fitting (14) according to any one of the preceding claims, wherein the intermediate ring (92) has a frustoconical outer peripheral surface (118), on which the two end segments (32) bear, and a cylindrical or frustoconical inner peripheral surface (116) on which the first end segments bear (32).

9. The end fitting (14) according to claim 8, wherein the intermediate ring (92) has at least one slot (120) emerging radially in the outer peripheral surface (118) and in the inner peripheral surface (116).

10. The end fitting (14) according to any one of the preceding claims, including an inner ring (90) defining the bearing surface (96).

11. The end fitting (14) according to any one of claims 1 to 9, including an annular flange (78) fastened on the end vault (50), the annular flange (78) defining the bearing surface (96).

12. The end fitting (14) according to any one of the preceding claims, wherein the outer cover (51) inwardly defines, in the receiving chamber (52), a front transverse stop (140), the outer ring (94) being wedged on the front transverse stop (140).

13. A flexible pipe (10) comprising at least one pressure sheath (20), a plurality of tensile armor layers (24, 25) arranged outwardly relative to the pressure sheath (20), and at least one connecting end fitting (14) according to any one of the preceding claims.

14. A method for assembling an end fitting (14) of a flexible pipe (10), the flexible pipe (10) comprising at least one pressure sheath (20) and a plurality of tensile armor layers (24, 25) arranged outwardly relative to the pressure sheath (20), the method comprising the following steps:
- arranging an outer ring (94) on second end segments (32) of a second armor layer (25);
- inserting an at least partially split intermediate ring (92) between first end segments (32) of a first armor layer (24) and the second end segments (32) of the second armor layer (25) located outwardly relative to the first end segments (32), the intermediate ring (92) being in contact with the first end segments (32) and with the second end segments (32);
- arranging the first end segments (32) of the first armor layer (24) on a bearing surface (96);
- clamping the second end segments (32) between the outer ring (94) and the intermediate ring (92), and clamping the first end segments (32) between the intermediate ring (92) and the bearing surface (96) under the effect of the radial deformation of the intermediate ring (92).

15. The method according to claim 14, wherein the clamping of the second end segments (32) and the first end segments (32) is done by radial or axial crimping of the outer ring (94).
